(19) Europäisches Patentamt
European Patent Office
Office européen des brevets

(11) **EP 2 818 698 B1**

(12) **EUROPEAN PATENT SPECIFICATION**

(45) Date of publication and mention
of the grant of the patent:
**09.08.2017   Bulletin 2017/32**

(51) Int Cl.:
**F03D 7/04** *(2006.01)*        **F03D 7/02** *(2006.01)*

(21) Application number: **13382252.8**

(22) Date of filing: **28.06.2013**

(54) **Methods of operating a wind turbine**

Verfahren zum Betrieb einer Windturbine

Procédé de fonctionnement d'une éolienne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.12.2014   Bulletin 2015/01**

(73) Proprietor: **Alstom Renovables España, S.L.**
**08005 Barcelona (ES)**

(72) Inventors:
• **Betran Palomas, Jaume**
**08172 Sant Cugat Del Vallès (ES)**
• **Guadayol Roig, Marc**
**08225 Terrassa (ES)**
• **Nualart, Pau**
**08401 Granollers (ES)**

• **Carcangiu, Carlo Enrico**
**08018 Barcelona (ES)**

(74) Representative: **ZBM Patents - Zea, Barlocci &
Markvardsen**
**Plaza Catalunya, 1**
**08002 Barcelona (ES)**

(56) References cited:
**EP-A1- 2 559 894        WO-A2-2012/055419
GB-A- 2 023 237        US-A1- 2010 021 296
US-A1- 2011 142 681        US-A1- 2013 028 733**

• **KHALFALLAH ET AL: "Effect of dust on the
performance of wind turbines", DESALINATION,
ELSEVIER, AMSTERDAM, NL, vol. 209, no. 1-3, 1
May 2007 (2007-05-01) , pages 209-220,
XP022068351, ISSN: 0011-9164, DOI:
10.1016/J.DESAL.2007.04.030**

EP 2 818 698 B1

**Description**

The present disclosure relates to methods of operating wind turbines.

BACKGROUND ART

Modern wind turbines are commonly used to supply electricity into the electrical grid. Wind turbine blades are typically attached, at a blade root portion, to a rotor hub, either directly or through an extender. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.

A variable speed wind turbine may typically be controlled by varying the generator torque and the pitch angle of the blades. As a result, aerodynamic torque, rotor speed and electrical power will vary.

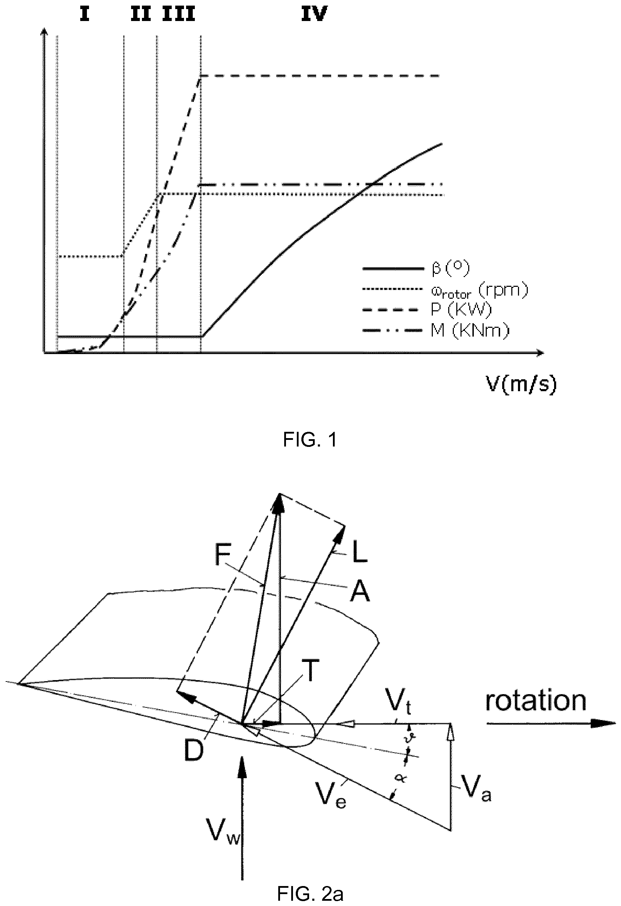

A common prior art control strategy of a variable speed wind turbine is described with reference to figure 1. In figure 1, the operation of a typical variable speed wind turbine is illustrated in terms of the pitch angle ($\beta$), the electrical power generated (P), the generator torque (M) and the rotational velocity of the rotor (w), as a function of the wind speed. The curve representing the electrical power generated as a function of the wind speed is typically called a power curve.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective is generally to maximize power output while maintaining the pitch angle of the blades constant so as to capture maximum energy. In order to achieve this objective, the generator torque and rotor speed may be varied so as to keep the tip speed ratio $\lambda$ (tangential velocity of the tip of the rotor blades divided by the prevailing wind speed) constant so as to maximize the power coefficient $C_p$.

In order to maximize power output and keep $C_p$ constant at its maximum value, the rotor torque may be set in accordance with the following equation:

$$T = k.\omega^2 \,,$$

wherein

k is a constant, and w is the rotational speed of the generator. In a direct drive wind turbine, the generator speed substantially equals the rotor speed. In a wind turbine comprising a gearbox, normally, a substantially constant ratio exists between the rotor speed and the generator speed.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

The before described operation may be translated into a power curve, such as the one shown in figure 1. Such a power curve may reflect the optimum operation of the wind turbine under steady-state and ideal design conditions. However, in non-steady state (transient) conditions, the operation may not necessarily be optimum. Furthermore, actual operating conditions may also differ from design conditions due to a variety of factors such as ice accretion or component wear.

As further background, basic aerodynamic behaviour of (the blades of) a wind turbine is explained with reference to figures 2a - 2c.

In figure 2a, a profile of a wind turbine blade is depicted in operation. The forces generated by the aerodynamic profile are determined by the wind that the profile "experiences", the effective wind speed $V_e$. The effective wind speed is composed of the axial free stream wind speed $V_a$ and the tangential speed of the profile $V_t$. The tangential speed of the profile $V_t$ is determined by the instantaneous rotor speed w and the distance to the centre of rotation of the profile, the local radius r, i.e. $V_t = w.r$.

The axial free stream wind speed $V_a$ is directly dependent on the wind speed $V_w$, and on the speed of the wind downstream from the rotor $V_{down}$, that is $V_a = \frac{1}{2}(V_w + V_{down})$. The axial free stream wind speed may e.g. be equal to approximately two thirds of the wind speed $V_w$.

The resultant wind flow, or effective wind speed $V_e$, generates lift L and drag D on the blade. A blade may theoretically be divided in an infinite number of blade sections, each blade section having its own local radius and its own local aerodynamic profile. For any given rotor speed, the tangential speed of each blade section will depend on its distance to the rotational axis of the hub (herein referred to as local radius).

The lift generated by a blade (section) depends on the effective wind speed $V_e$, and on the angle of attack of the blade (section) $\alpha$, in accordance with the following formula:

$$L = \frac{1}{2} \rho.C_L V_e^{2}.S ,$$

wherein
$\rho$ is the air density, $V_e$ is the effective wind speed, $C_L$ is the lift coefficient (dependent on the angle of attack $\alpha$) and S is the surface of the blade section.

Similarly, the drag D generated by a blade section can be determined in accordance with the following equation:

$$D = \frac{1}{2} \rho.C_D V_e^{2}.S ,$$

wherein
$C_D$ is the drag coefficient dependent on the angle of attack $\alpha$.

For an entire wind turbine blade, the contribution to lift and drag of each blade section may be summed to arrive at the total drag and lift generated by the blade.

Both the drag coefficient $C_D$ and the lift coefficient $C_L$ depend on the profile or the blade section and vary as a function of the angle of attack of the blade section. The angle of attack $\alpha$ may be defined as the angle between the chord line of a profile (or blade section) and the vector of the effective wind flow, see figure 2a.

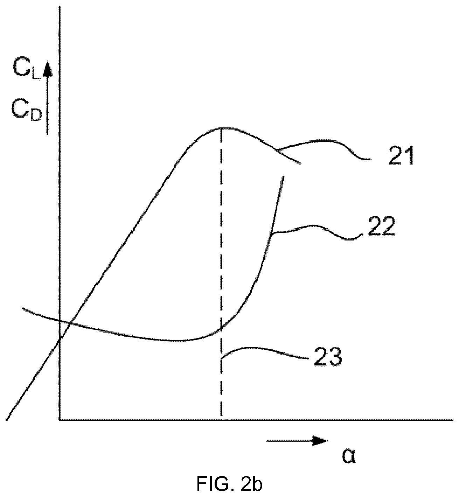

Figure 2b illustrates in a very general manner how the lift coefficient and drag coefficient may vary as a function of the angle of attack of a blade section. Generally, the lift coefficient (reference sign 21) increases to a certain maximum at a so-called critical angle of attack 23. This critical angle of attack is also sometimes referred to as stall angle. The drag coefficient (reference sign 22) may generally be quite low and starts increasing in an important manner close to the critical angle of attack 23. This rapid change in aerodynamic behaviour of a profile or blade section is linked generally to the phenomenon that the aerodynamic flow around the profile (or blade section) is not able to follow the aerodynamic contour and the flow separates from the profile. The separation causes a wake of turbulent flow, which reduces the lift of a profile and increases the drag significantly.

The exact curves of the lift coefficient and drag coefficient may vary significantly in accordance with the aerodynamic profile chosen. However, in general, regardless of the aerodynamic profile chosen, a trend to increasing lift up until a critical angle of attack and also a rapid increase in drag after the critical angle of attack can be found.

In accordance with figure 2a, the tangential force generated by a blade section is given by $T = L.\sin(\alpha + \vartheta) - D.\cos(\alpha + \vartheta)$, wherein $\vartheta$ is the pitch angle and $\alpha$ is the angle of attack. The pitch angle may be defined as the angle between the rotor plane and the chord line of a profile. Integrating the tangential force distribution over the radius provides the driving torque.

In order to increase the torque generated by the rotor, the angle of attack of any blade section is preferably kept below the critical angle of attack such that lift may be higher and drag may be lower.

It should be borne in mind that the angle of attack of each blade section depends on the tangential speed of the specific rotor blade section, the wind speed, the pitch angle and the local twist angle of the blade section. The local twist angle of a blade section may generally be considered constant, unless some kind of deformable blade is used. The tangential speed of the rotor blade section depends on the rotor speed (angular velocity of the rotor which is obviously the same for the whole blade and thus for each blade section) and on the distance of the blade section to the rotational axis.

For a given pitch angle, it follows that the angle of attack is determined by the tip speed ratio: $\lambda = \dfrac{\omega.R}{V_w}$.

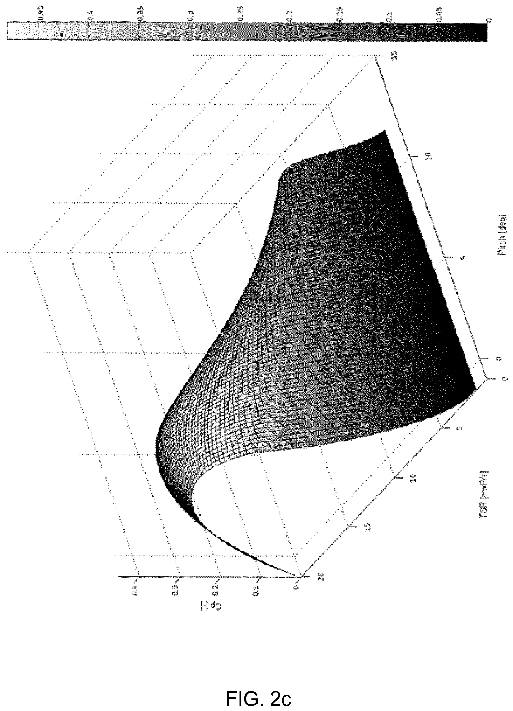

From this, it follows that the torque generated by a rotor blade section may become a rather complicated function of the instantaneous tip speed ratio and the pitch angle of the blade. This relationship may be illustrated with a figure such as figure 2c, which depicts the power coefficient ($C_p$), i.e. the ratio between the mechanical power captured by the wind turbine rotor and the available power in the wind, as a function of tip speed ratio $\lambda$ and the blade pitch angle.

In the second operational range mentioned before, the pitch angle is generally equal to zero. For a given pitch angle, there is a certain tip speed ratio that gives the highest $C_p$, i.e. the most efficient operation point, as observed in figure 2c when the plane corresponding to zero pitch is considered. In this second operational range of wind speed, the generator torque is adjusted as a function of the rotor speed, in accordance with $T = k.\omega^2$. This operation is based on keeping a constant tip speed ratio and maximum $C_P$.

Wind turbine blades are typically designed for optimum aerodynamic conditions to optimize the wind turbine's performance for maximum generation of electricity. However, during operation, the blades are exposed to numerous atmospheric conditions that may cause a built-up of dirt or grime from dust, salt (especially in off-shore wind turbines), dead insects, bird droppings and other foreign substances, on the surface of the blade.

Dirty blades generate less lift thus decreasing the efficiency of the wind turbine. In natural conditions, dirt and insects often soil wind turbine blades at the leading edge. Roughness at the leading edge may cause an early transition from laminar to turbulent flow, i.e. whereas a laminar boundary layer would be arranged around a clean blade section, a dirty blade section for the same wind speed, and the same angle of attack may have a turbulent boundary layer. This may reduce the maximum lift that can be obtained. The curve of the lift coefficient may have a reduced slope starting at a certain angle of attack. The lift is thus reduced for a given angle of attack and the drag may be increased due to increased friction when blades are dirty. As a result, a loss in power production may occur.

As mentioned before, a typical curve of lift coefficient of a blade profile versus angle of attack such as reference 21 of figure 2b shows that with increasing angle of attack, the lift coefficient of the profile increases, until "stall". If the angle of attack is increased further, the lift coefficient is reduced. During operation, whenever the blades become dirty the lift coefficient of the profile starts to "flatten" before reaching a stall condition. This reduces efficiency of the wind turbine thus resulting in loss of power production.

Blades can be cleaned naturally by rain. However, the blades are normally not sufficiently cleaned for optimum performance. This can even be worse at sites with less rainfall. In such situations manual cleaning of the blades is normally used. If manual cleaning is used, this may be very expensive and this sort of cleaning can hardly be carried out on a continuous basis. Cleaning equipment installed on a wind turbine is also known.

Even if blades are regularly cleaned, when they are dirty, they do not perform as well as they theoretically should. The control of the wind turbine in terms of pitch, rotor speed, generator torque etc. may not be optimum for the blades that do not perform as they are supposed to.

Document EP2559894 describes a method to adjust the pitch angle of the blades of a wind turbine blade which is especially used if the aerodynamic performance of the wind turbine blades is influenced by weather conditions.

There thus still exists a need for improved methods of operating a wind turbine that increase wind turbine efficiency, especially suitable for dirty blades.

SUMMARY

In a first aspect a method of operating a wind turbine is provided, the wind turbine having a rotor with a plurality of blades, each blade having a default surface condition and the default surface condition has a representative theoretical lift coefficient curve. The operation of the wind turbine comprises a sub-nominal zone of operation for wind speeds below a nominal wind speed, and a supra-nominal zone of operation for wind speeds equal to or above the nominal wind speed. The method comprises predefining a first and a second set of parameters, the first set of parameters being suitable for the default surface condition and the second set of parameters being suitable for any other surface condition different from default surface condition, detecting a change in the surface condition of a blade from the default surface condition, and changing from the first set of parameters to the second set of parameters of the blade such that the blade performs substantially according to the representative theoretical lift coefficient curve.

According to this aspect, once a change in the blade surface condition is detected a set of parameters of the blade is modified (or activated) so that the performance of the blade continues as if no significant change in the blade surface condition has occurred. A change in the surface condition of a blade results in a deviation from the representative theoretical lift curve. By changing a set of parameters of the blade, the blades can thus continue performing substantially along the representative theoretical lift curve which increases power production.

The operational parameters of the blades can be changed without stopping the wind turbine. It is thus no longer necessary to stop the wind turbine for example for cleaning a blade surface in order for the blade to continue performing substantially along the representative theoretical lift curve which is usually calculated for a clean default surface condition.

It is thus a quite cost-effective solution and is based primarily on components which are normally already present in a wind turbine.

In some cases, the default surface condition may be "clean" and a deviation from this surface condition thus means that the blade is "dirty". The set of parameters of the wind turbine may thus be adapted for this change in condition.

In some cases, a default situation of a blade may be that it is dirty. For example, in a desert environment it is possible that the majority of the time (e.g. 80 or 90% of the time), the blades are actually dirty. It thus makes sense to design the blades in these conditions in order to have a default operation assuming dirty conditions. When it is detected that the blade is not dirty, the set of parameters may be adapted to accommodate to this change.

It has been found that in many wind turbines, the definition of two blade surface conditions, i.e. "dirty" or "clean" is enough. That is, in most wind turbines, the blades tend to behave as clean blades or as dirty blades (with earlier transition to turbulent flow) and there appears to be no intermediate condition of e.g. "half dirty - half clean". However, it is possible in some wind turbines that due to local conditions, only a part of the blade gets dirty, whereas other parts of the blade stay clean. In these cases, more than two surface conditions may be defined.

In some embodiments, the wind turbine may comprise a pitch control system for determining the pitch angles for each of the blades and one or more pitch mechanisms for rotating the blades along their longitudinal axes in accordance with the pitch angles determined by the pitch control system. In these cases, changing a set of parameters of the blade may comprise changing a pitch angle of the blade. A change in the surface condition of the blade results in a deviation from the representative theoretical lift curve. Therefore, since changing the pitch angle of the blade represents a change in the lift and drag generated by the blade, performing this action is one possible alternative one can use to increase wind turbine's efficiency depending on circumstances.

In some embodiments, at least one of the blades may comprise one or more active surfaces and changing a set of parameters of the blade may comprise activating at least one of the active surfaces. By activating one or more active surfaces of a blade a change in the lift and drag generated by the blade is obtained. Since the active surfaces influence the aerodynamic flow around the blades, activating any of such active surfaces is another alternative one can use to increase wind turbine's efficiency in case of deviation from theoretical behaviour.

In some of these cases, each of the blades may comprise one or more deformable trailing edge sections (e.g. flaps) and changing a set of parameters of the blade may comprise activating at least one of the deformable trailing edge sections. In particular, flaps provided along the trailing edge of a blade can be actuated relatively quickly and have the capability of quickly modifying the lift and drag of a blade.

In some embodiments, the method may further comprise detecting that the surface condition of the blade has returned to the default surface condition, and changing the set of parameters of the blade such that the blade performs substantially according to the representative theoretical lift curve.

Additional objects, advantages and features of embodiments of the present invention will become apparent to those skilled in the art upon examination of the description, or may be learned by practice of the invention.

BRIEF DESCRIPTION OF THE DRAWINGS

Particular embodiments of the present invention will be described in the following by way of non-limiting examples, with reference to the appended drawings, in which:

Figure 1 shows a typical power curve of a wind turbine;

Figures 2a - 2c show aerodynamics of wind turbine blades and aerodynamic profiles in general;

Figure 3 shows aerodynamics related to an example of methods according to the present disclosure; and

Figure 4 shows different flap positions.

DETAILED DESCRIPTION

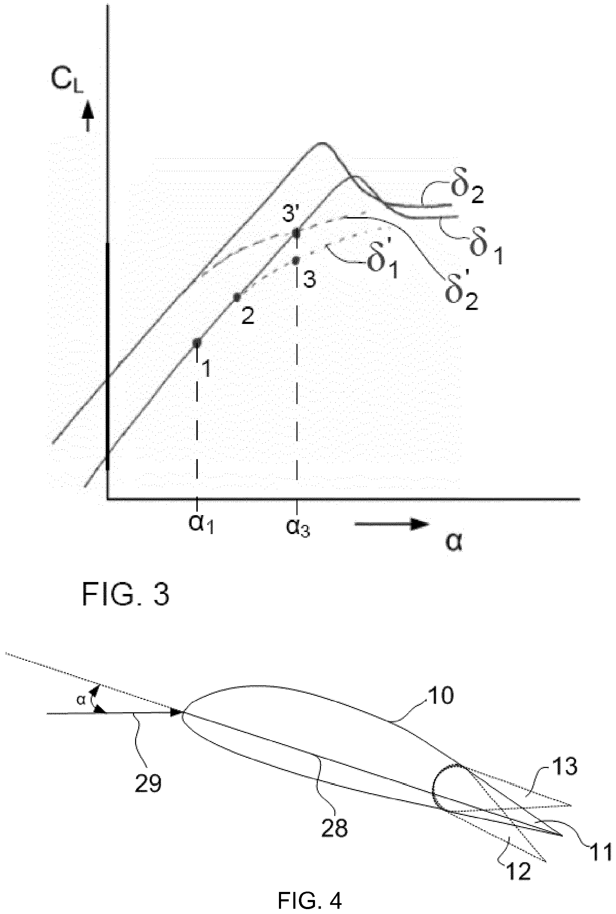

Figure 3 shows the lift coefficient as a function of the angle of attack of two blade sections. References $\delta_1$ and $\delta_2$ show the two representative theoretical lift coefficient curves for which the profiles of these two blade sections have been designed. In particular, in this example reference $\delta_1$ refers to a theoretical lift coefficient curve for a blade section and reference $\delta_2$ refers to the theoretical lift coefficient curve for the same blade section but with an activated flap. As mentioned above, the lift coefficient may increase to a certain maximum at the so-called critical angle of attack or stall angle. From this point on, the lift coefficient may start decreasing quite quickly as the angle of attack increases.

In the example shown in figure 3 the default surface condition may be a clean surface.

References $\delta'_1$ and $\delta'_2$ show the same two representative lift coefficient curves, but for dirty blades. Dirt has a tendency to increase the drag and reduce the lift of a blade profile therefore the depicted lift coefficient curve for dirty blades is lower than the theoretical curve e.g from point 2 onwards.

In these cases, when the angle of attack changes from $\alpha_1$ to $\alpha_3$ (this may be caused by a combination of a changing wind speed and according actuation of a pitch system), and if the blades are at this moment dirty, the lift coefficient indicated at point 1 may thus change to point 3 following the real lift coefficient curve $\delta'_1$ instead of to point 3' according to the theoretical lift coefficient curve. According to the present disclosure, in order to follow or get at least closer to the theoretical lift coefficient curve $\delta_1$, at point 2 a flap may for example be activated and controlled in such a manner that it increases the lift of the blade and thus the lift coefficient may continue substantially along its theoretical path to point 3'. Thus, the behaviour of the profile having one or more operational parameters changed (for example an activated flap) is such that it actually follows a real curve $\delta_2'$ (instead of its theoretical $\delta_2$) whose $C_L$ value at $\alpha_3$ does in fact correspond to the theoretical value for the original profile at that angle of attack when the surface is in its default condition, i.e. $\delta_2'(\alpha_3) = \delta_1(\alpha_3)$.

In the sub-nominal zone of operation, i.e. at wind speeds below the nominal wind speed, activating a flap may comprise activating the flap as a function of the rotational speed of the rotor since, at least in the second operational range of operation described before, for a given blade section there is a given relationship between the rotational speed of the rotor and the local angle of attack. In the third operational range, there is a given relationship between the generator torque and the same local angle of attack. In this range, the position of one or more flaps to follow a theoretical lift curve may be defined as a function of the generator torque.

In the supra-nominal zone of operation, i.e. at wind speeds equal to or above the nominal wind speed, activating a flap may comprise defining the position of one or more flaps as a function of the pitch angle of the blade in order to follow a theoretical lift curve.

In some embodiments, the flaps may be distributed along the length of the blade and/or the flaps may be adapted to be actuated individually. Other active surfaces such as slats, spoilers and boundary layer control devices or similar could also be provided. In alternative embodiments, a deformable trailing edge or any other active surface allowing a change in the aerodynamic profile in order to compensate lift may also be foreseen. For all these devices, their actuation may be defined as a function of generator torque, rotor speed or pitch angle depending on the operational range as described before.

In some embodiments, at point 2 of figure 3, instead of activating an active surface provided on the blade, the pitch angle may be changed such that the lift coefficient continues substantially along its theoretical path towards point 3'. This may be done using a pitch mechanism that is usually present in a wind turbine for rotating the blades along its longitudinal axis in accordance with instructions from the pitch control system that may also usually be present in a wind turbine for controlling the pitch mechanisms.

In some of these cases, the pitch angle of the blade may be changed in the sub-nominal zone of operation. This contravenes normal practice by changing the pitch angle of the blades in the sub-nominal zone of operation. An example in which it may be interesting to pitch the blades in the sub-nominal zone of operation may be e.g. those cases in which the default surface condition may be a dirty surface. In these cases, when in the sub-nominal zone of operation there may be e.g. some rain upon which the surface condition may be changed to a clean surface, this change represents an increase in the lift and torque of the blade. Therefore, in order to return or get at least closer to the theoretical lift curve the blade may be pitched.

In further cases, when the wind speeds are equal to or above the nominal wind speed, i.e. in the supra-nominal zone of operation, the pitch control system may determine the pitch angles such as to maintain a default rotational speed of the (generator) rotor based upon substantially continuously determining rotational speed of the rotor and supplying the determined rotational speed of the rotor to the pitch control system.

In some cases, the pitch control system may include a proportional-integral-derivative (PID) control loop based upon an error defined as the difference between the measured rotational speed of the rotor and the default rotational speed of the rotor. In some of these cases, changing one or more operational parameters of the blade may comprise changing one or more constants of the PID control loop. This way, by changing these constants, the blade's lift behaviour can be substantially maintained as theoretically designed.

A PID control loop for a pitch angle may be defined by the following mathematical equation:

$$\vartheta = K_P \varepsilon(t) + K_i \int_0^t \varepsilon(\tau) d\tau + K_d \frac{d}{dt} \varepsilon(t),$$

wherein

$\varepsilon$ is the error between the instantaneous rotor speed and a predefined rotor speed, $K_p$ is the proportional gain constant, $K_i$ is the integral gain constant, $K_d$ is the derivative gain constant, t is time and T is the variable of integration.

In some cases, the PID control loop may comprise two sets of constants, one set of constants may be suitable for the default surface condition, for example a clean surface or a dirty surface, and the other set of constants may be suitable for the other surface condition, for example the other of a clean or a dirty surface. This simplifies operation of the controller as it does not need to detect how clean or how dirty the blade surface is, but rather just the fact that it is either clean or dirty.

In this disclosure, a PID control should be understood as including controls wherein one or more of the gain constants are zero, such as e.g. a PI control or a PD control.

In some cases, as mentioned above and depicted in figure 3, the default surface condition may be clean. In these cases detecting a change in the surface condition of a blade from the default surface condition means detecting dirt on the blades' surface. In other cases, the default surface condition may be dirty and detecting a change in the surface condition of a blade from the default surface condition means detecting a clean blade surface, e.g. after a rainfall. In these cases the blades are designed for a default dirty surface condition and a surface condition different from the default surface condition may have a lift coefficient higher in the real curve than the theoretical curve and a decrease in the lift may be required in order to follow the theoretical path. This may be interesting e.g. in those sites in which almost no rain falls because the blade surface in such sites will spend most of the time in a dirty surface condition.

Figure 4 shows a blade profile 10 comprising a flap in three different positions: a neutral position 11, a positive position 12 (in which the flap has a positive contribution to the lift) and a negative position 13 (in which the flap has a negative contribution to the lift). A positive position 12 of the flap may be used in the example shown in figure 3. In alternative embodiments in which the default surface condition is dirty, a negative position 13 of the flap may be used to return to the theoretical lift coefficient curve. Figure 4 further shows the angle of attack $\alpha$ which may be defined as the angle between a reference line on a lifting body (in this case, the chord line of an airfoil 28) and the vector 29 representing the relative motion between the blade and the air through which it is moving.

In order to detect a change in the surface condition of a blade, each blade may comprise at least one sensor. In one example the ice detection sensors that are usually provided in the blades may be used. Apart from sensors directly mounted on the blades, it is also possible for example to provide a camera in such a position allowing visibility of the blade surface.

Mentioned above are some of several possible combinations available.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

**Claims**

1. Method of operating a wind turbine comprising a rotor with a plurality of blades, each blade having a default surface condition, the default surface condition having a representative theoretical lift coefficient curve, wherein
   operation of the wind turbine comprises a sub-nominal zone of operation for wind speeds below a nominal wind speed, and supra-nominal zone of operation for wind speeds equal to or above the nominal wind speed and the method comprising:

   predefining a first and a second set of parameters, the first set of parameters being suitable for the default surface condition and the second set of parameters being suitable for any other surface condition different from default surface condition,
   detecting a change in the surface condition of a blade from the default surface condition, and
   changing from the first set of parameters to the second set of parameters of the blade such that the blade performs substantially according to the representative theoretical lift coefficient curve.

2. Method according to claim 1, wherein the wind turbine further comprises
   a pitch control system for determining the pitch angles for each of the blades and
   one or more pitch mechanisms for rotating the blades along their longitudinal axes in accordance with the pitch angles determined by the pitch control system, and wherein
   changing from the first set of parameters to the second set of parameters of the blade comprises changing a pitch angle of the blade.

3. Method according to claim 2, wherein the pitch angle of the blade is changed in the sub-nominal zone of operation.

4. Method according to claim 2 or 3, wherein in the supra-nominal zone of operation, the pitch control system determines the pitch angles such as to maintain a default rotational speed of the rotor based upon substantially continuously determining the rotational speed of the rotor and supplying the determined rotational speed of the rotor to the pitch control system.

5. Method according to claim 4, wherein the pitch control system includes a proportional-integral-derivative (PID) control loop based upon an error defined as the difference between the measured rotational speed of the rotor and the default rotational speed of the rotor.

6. Method according to claim 5, wherein changing from the first set of parameters to the second set of parameters of the blade comprises changing two sets of constants of the PID control loop, one set of constants being suitable for the default surface condition and the other set of constants being suitable for any other surface condition different from default surface condition.

7. Method according to any of claims 1 - 6, wherein at least one of the blades comprises one or more active surfaces and
   changing from the first set of parameters to the second set of parameters of the blade comprises activating at least one of the active surfaces.

8. Method according to claim 7, wherein each of the blades comprises one or more deformable trailing edge sections and
   changing from the first set of parameters to the second set of parameters of the blade comprises activating at least one of the deformable trailing edge sections.

9. Method according to claim 7 or 8, wherein each of the blades comprises one or more flaps and
   changing from the first set of parameters to the second set of parameters of the blade comprises activating one or more flaps.

10. Method according to claim 9, wherein the flaps are distributed along the length of the blade.

11. Method according to any of claims 7 - 10, wherein in the supra-nominal zone of operation,
    activating at least one of the active surfaces comprises activating at least one of the active surfaces as a function of the pitch angle of the blade.

12. Method according to any of claims 7 - 11, wherein in the sub-nominal zone of operation, activating at least one of the active surfaces comprises activating at least one of the active surfaces as a function of the rotational speed of the rotor.

13. Method according to any of claims 1 - 12, wherein the default surface condition is either clean or dirty.

14. Method according to any of claims 1 - 13, the method further comprising detecting that the surface condition of the blade has returned to the default surface condition, and changing from the second set of parameters to the first set of parameters of the blade such that the blade performs substantially according to the representative theoretical lift coefficient curve.

**Patentansprüche**

1. Verfahren zum Betrieb einer Windturbine umfassend einen Rotor mit einer Vielzahl von Blättern, wobei jedes Blatt einen vorgegebenen Oberflächenzustand hat, wobei der vorgegebene Oberflächenzustand eine repräsentative theoretische Auftriebsbeiwertkurve hat, wobei

der Betrieb der Windturbine ein subnominales Betriebsfeld für Windgeschwindigkeiten unterhalb einer Nennwindgeschwindigkeit und ein supranominales Betriebsfeld für Windgeschwindigkeiten entsprechend der Nennwindgeschwindigkeit oder oberhalb deren umfasst, und wobei das Verfahren folgendes umfasst:

das Vorherbestimmen von einer ersten und einer zweiten Reihe von Parametern, wobei die erste Reihe von Parametern geeignet für den vorgegebenen Oberflächenzustand ist und die zweite Reihe von Parametern geeignet für jeden anderen vom vorgegebenen Oberflächenzustand abweichenden Oberflächenzustand ist, das Ermitteln von einer Variation im Oberflächenzustand eines Blattes bezüglich des vorgegebenen Oberflächenzustandes, und das Wechseln von der ersten Reihe von Parametern zu der zweiten Reihe von Parametern des Blattes, so dass das Blatt im Wesentlichen gemäß der repräsentativen theoretischen Auftriebsbeiwertkurve arbeitet.

2. Verfahren nach Anspruch 1, wobei die Windturbine weiterhin folgendes umfasst ein Pitchregelsystem zur Feststellung von Blatteinstellwinkeln für jedes Blatt und eine oder mehrere Blattverstellvorrichtungen zur Drehung der Blätter entlang deren Längsachsen gemäß dem durch das Pitchregelsystem festgestellten Blatteinstellwinkel, und wobei das Wechseln von der ersten Reihe von Parametern zu der zweiten Reihe von Parametern des Blattes die Variation von einem Blattverstellwinkel des Blattes umfasst.

3. Verfahren nach Anspruch 2, wobei der Blatteinstellwinkel des Blattes im subnominalen Betriebsfeld variiert wird.

4. Verfahren nach Anspruch 2 oder 3, wobei das System zur Pitchregelung im supranominalen Betriebsfeld die Blatteinstellwinkel feststellt, um beruhend auf einer im Wesentlichen kontinuierlichen Feststellung der Rotordrehzahl und Übermittlung der festgestellten Rotordrehzahl an das System zur Pitchregelung eine vorgegebene Rotordrehzahl zu behalten.

5. Verfahren nach Anspruch 4, wobei das System zur Pitchregelung einen PID-Regelkreis umfasst, der auf einem Fehler beruht, der als die Differenz zwischen der gemessenen Rotordrehzahl und der vorgegebenen Rotordrehzahl definiert ist.

6. Verfahren nach Anspruch 5, wobei das Wechseln von der ersten Reihe von Parametern zu der zweiten Reihe von Parametern des Blattes das Wechseln von zwei Reihen von Konstanten des PID-Regelkreises umfasst, wobei eine Reihe von Konstanten geeignet für den vorgegebenen Oberflächenzustand ist und die andere Reihe von Konstanten geeignet für jeden anderen vom vorgegebenen Oberflächenzustand abweichenden Oberflächenzustand ist.

7. Verfahren nach einem der Ansprüche 1 - 6, wobei mindestens eines der Blätter eine oder mehrere aktive Oberflächen umfasst und das Wechseln von der ersten Reihe von Parametern zu der zweiten Reihe von Parametern des Blattes das Aktivieren von mindestens einer der aktiven Oberflächen umfasst.

8. Verfahren nach Anspruch 7, wobei jedes Blatt einen oder mehreren verformbaren Hinterkantenabschnitte umfasst und das Wechseln von der ersten Reihe von Parametern zu der zweiten Reihe von Parametern des Blattes das Aktivieren von mindestens einem der verformbaren Hinterkantenabschnitten umfasst.

9. Verfahren nach Anspruch 7 oder 8, wobei jedes Blatt eine oder mehrere Klappen umfasst und das Wechseln von der ersten Reihe von Parametern zu der zweiten Reihe von Parametern des Blattes das Aktivieren von einer oder mehreren Klappen umfasst.

10. Verfahren nach Anspruch 9, wobei die Klappen entlang der Länge des Blattes verteilt sind.

11. Verfahren nach einem der Ansprüche 7 - 10, wobei das Aktivieren von mindestens einer der aktiven Oberflächen im supranominalen Betriebsfeld das Aktivieren von mindestens einer der aktiven Oberflächen als Funktion des Blatteinstellwinkels umfasst.

12. Verfahren nach einem der Ansprüche 7 - 11, wobei im subnominalen Betriebsfeld
das Aktivieren von mindestens einer der aktiven Oberflächen das Aktivieren von mindestens einer der aktiven Oberflächen als Funktion der Rotordrehzahl umfasst.

13. Verfahren nach einem der Ansprüche 1 - 12, wobei der vorgegebene Oberflächenzustand entweder sauber oder nicht sauber ist.

14. Verfahren nach einem der Ansprüche 1 - 13, wobei das Verfahren weiterhin folgendes umfasst
das Feststellen dessen, dass der Oberflächenzustand des Blattes nochmal dem vorgegebenen Oberflächenzustand entspricht, und
das Wechseln von der zweiten Reihe von Parametern zu der ersten Reihe von Parametern des Blattes, so dass das Blatt im Wesentlichen gemäß der repräsentativen theoretischen Auftriebsbeiwertkurve arbeitet.

**Revendications**

1. Procédé de fonctionnement d'une éolienne comprenant un rotor avec une pluralité de pales, chaque pale ayant un état de surface prédéfini, l'état de surface prédéfini ayant une courbe de coefficient de portance théorique représentative, dans lequel
le fonctionnement de l'éolienne comprend une région subnominale de fonctionnement pour des vitesses du vent au-dessous d'une vitesse nominale du vent et une région supranominale de fonctionnement pour des vitesses du vent égales à ou au-dessus de la vitesse nominale du vent et le procédé comprenant :

prédéfinir une première et une deuxième série de paramètres, la première série de paramètres étant appropriée pour l'état de surface prédéfini et la deuxième série de paramètres étant appropriée pour tout état de surface différent de l'état de surface prédéfini,
détecter un changement dans l'état de surface d'une pale par rapport à l'état de surface prédéfini, et
changer de la première série de paramètres à la deuxième série de paramètres de la pale de façon que la pale fonctionne essentiellement selon la courbe de coefficient de portance théorique représentative.

2. Procédé selon la revendication 1, dans lequel l'éolienne comprend en outre
un système de contrôle de tangage pour déterminer les angles de tangage pour chacune des pales et un ou plusieurs mécanismes de commande de pas de pale pour faire pivoter les pales le long de leurs axes longitudinaux conformément aux angles de tangage déterminés par le système de contrôle de tangage, et dans lequel
changer de la première série de paramètres à la deuxième série de paramètres de la pale comprend modifier un angle de tangage de la pale.

3. Procédé selon la revendication 2, dans lequel l'angle de tangage de la pale est modifié dans la région subnominale de fonctionnement.

4. Procédé selon la revendication 2 ou 3, dans lequel dans la région supranominale de fonctionnement, le système de contrôle de tangage détermine les angles de tangage afin de maintenir une vitesse de rotation prédéfinie du rotor à partir d'une détermination essentiellement continue de la vitesse de rotation du rotor et de la transmission de la vitesse de rotation du rotor déterminée au système de contrôle de tangage.

5. Procédé selon la revendication 4, dans lequel le système de contrôle de tangage inclut une boucle de régulation PID (proportionnel, intégrateur, dérivateur) basée sur une erreur définie comme la différence existante entre la vitesse de rotation du rotor mesurée et la vitesse de rotation du rotor prédéfinie.

6. Procédé selon la revendication 5, dans lequel changer de la première série de paramètres à la deuxième série de paramètres de la pale comprend changer deux séries de constants de la boucle de régulation PID, une série de constants étant appropriée pour l'état de surface prédéfini et l'autre série de constants étant appropriée pour tout état de surface différent de l'état de surface prédéfini.

7. Procédé selon l'une quelconque des revendications 1 - 6, dans lequel au moins une des pales comprend une ou plusieurs surfaces actives et
changer de la première série de paramètres à la deuxième série de paramètres de la pale comprend activer au moins une des surfaces actives.

8. Procédé selon la revendication 7, dans lequel chacune des pales comprend une ou plusieurs sections de flanc arrière déformables et

changer de la première série de paramètres à la deuxième série de paramètres de la pale comprend activer au moins une des sections de flanc arrière déformables.

**9.** Procédé selon la revendication 7 ou 8, dans lequel chacune des pales comprend un ou plusieurs volets et

changer de la première série de paramètres à la deuxième série de paramètres de la pale comprend activer un ou plusieurs volets.

**10.** Procédé selon la revendication 9, dans lequel les volets sont distribués le long de la longueur de la pale.

**11.** Procédé selon l'une quelconque des revendications 7 - 10, dans lequel dans la région supranominale de fonctionnement,
activer au moins une des surfaces actives comprend activer au moins une des surfaces actives en fonction de l'angle de tangage de la pale.

**12.** Procédé selon l'une quelconque des revendications 7 - 11, dans lequel dans la région subnominale de fonctionnement,
activer au moins une des surfaces actives comprend activer au moins une des surfaces actives en fonction de la vitesse de rotation du rotor.

**13.** Procédé selon l'une quelconque des revendications 1 - 12, dans lequel l'état de surface prédéfini est propre ou sale.

**14.** Procédé selon l'une quelconque des revendications 1 - 13, le procédé comprenant en outre
détecter que l'état de surface de la pale est retourné à l'état de surface prédéfini, et
changer de la deuxième série de paramètres à la première série de paramètres de la pale de façon que la pale fonctionne essentiellement selon la courbe de coefficient de portance théorique représentative.

FIG. 1

FIG. 2a

FIG. 2b

FIG. 2c

FIG. 3

FIG. 4

**EP 2 818 698 B1**

## REFERENCES CITED IN THE DESCRIPTION

**Patent documents cited in the description**

- EP 2559894 A